# EUROPÄISCHE PATENTSCHRIFT

(11) **EP 2 338 928 B1**
(45) Veröffentlichungstag und Bekanntmachung des Hinweises auf die Patenterteilung: **02.11.2011**
(21) Anmeldenummer: 09015622.5
(22) Anmeldetag: 17.12.2009
(51) Int. Cl.: C08G 69/36, C09J 177/00, D01F 6/80, D04H 1/54

(54) **Bindefaser zur Verfestigung von Naturfasern enthaltenden Flachmaterialien**
Binding fibre for fixing flat materials containing natural fibres
Fibre de liaison destinée à la fixation de matériaux plats contenant des fibres naturelles

(43) Veröffentlichungstag der Anmeldung: 29.06.2011
(73) Patentinhaber: EMS-PATENT AG, 7013 Domat / Ems (CH)
(72) Erfinder: Bender, Klaus, Dr., 7402 Bonaduz (CH); Schäch, Gunther, 7000 Chur (CH); Kinkelin, Eberhard, Dr., 7000 Chur (CH)
(74) Vertreter: Lauer, Joachim

(56) Entgegenhaltungen:
- EP-A2- 0 627 454
- WO-A1-2006/102975
- JP-A- 2008 038 260
- US-A- 3 515 702
- US-A- 3 664 914
- US-A- 3 883 485
- US-A- 3 933 762

## Beschreibung

### TECHNISCHES GEBIET

Die vorliegende Erfindung betrifft eine Bindefaser zur Verfestigung von Naturfasern enthaltenden Flachmaterialien mit heissem Dampf, wobei die Naturfasern insbesondere Holzfasern oder Zellulosefasern und die Flachmaterialien insbesondere Papier, Karton, Vliese, Fasermatten oder Faserplatten sind.

### STAND DER TECHNIK

Aus DT 19 13 246 ist die Verwendung von vorstehend als Bindefasern bezeichneten Fasern zur Verfestigung von Vliesen aus natürlichen oder synthetischen Vliesen bekannt, welche einen deutlich niedrigeren Schmelzpunkt als die übrigen, vliesbildenden Fasern besitzen. Durch eine Temperaturbehandlung werden die Bindefasern erweicht und dadurch die anderen Fasern miteinander verklebt. DT 1913 246 schlägt weiter vor, als Bindefasern Bikomponentenfasern insbesondere in KernMantel-Struktur zur verwenden, wobei die Kernkomponente Polyamid 6 und die Mantelkomponente aus einem Copolyamid aus Aminocapronsäure und Aminoundecansäure besteht. Die Verfestigung der Vliese erfolgt in diesem Fall bei 130°C bzw. 135°C.

Aus DE 297 20 598 U1 ist die Verwendung von Bikomponentenpolyamidfasern, Bikomponentenpolyesterfasern oder von amorphen Polyesterklebefasern zur Verfestigung von Naturfasern enthaltenden Vliesstoffen bekannt. Diese Materialien sollen sich gegenüber Polyolefinen mit grösserer Polarität auf molekularer Basis gut mit den Naturfasern, insbesondere den darin enthaltenden Zellulose-Molekülen verbinden. Im Falle der Bikomponentenpolyamidfasern besteht der Kern aus Polyamid 66 und der Mantel aus Polyamid 6 oder der Kern aus Polyamid 6 und der Mantel aus einem Copolyamid. Für die Bikomponentenpolyesterfasern sind Verfestigungstemperaturen im Bereich von 100°C bis 205°C angegeben mit bevorzugten Werten des Mantels höher als 140°C, insbesondere höher als 160°C. Im angegebenen Beispiel wird in einem Heissluftofen bei einer Temperatur von 182°C verfestigt. Über die Bikomponentenfasern wird ausgesagt, dass mit einem kristallinen Mantelpolymer gegenüber einem amorphen Mantelpolymer sich eine höhere Stabiliät des Endprodukts ergibt. Der Mantel der als Beispiel gewählten Unitika Faser Melty 7080 besteht z.B. aus einem teilkristallinen Copolyester. Über amorphe Polyesterklebefasern aus Polyethylentherephthalat (PET) (z.B. Grilon KB der EMS-Chemie AG) wird ausgesagt, dass diese aufgrund ihrer amorphen Struktur bereits ab 70°C klebrig werden, dass dieser Fasertyp aber ab 125°C kristallisiert und dadurch den PET-Schmelzpunkt von 254°C erreicht. Die Verfestigung mit einer solchen Klebefaser muss aber unter Druck erfolgen.

Aus DE 10 2004 062 647 A1 und DE 10 2004 062 649 A1 sind Holzfaserdämmstoffplatten mit Dichten bis zu 300 kg/m³ bekannt, für deren Herstellung thermoplastische Bindefasern vorzugsweise in Kombination mit einem Kunstharzgranulat verwendet werden. Die Bindefasern und das Kunstharzgranulat werden in einem Ofen bei Temperaturen von 130°C - 200°C, insbesondere 160°C bis 185°C, erweicht und damit aktiviert.

DE 102 00 559 A1 beschreibt eine Schalldämmmatte aus Naturrohstofffasem wie Holzfasern und diesen beigemischten Bikomponenten-Bindefasern aus Polyester vom Kern/Mantel-Typ, wobei die Kernfaser aus einem Polyester mit einem Schmelzpunkt über 160°C und der Mantel aus einem Polyester mit einem Schmelzbereich zwischen 110°C und 130°C besteht. Das im sogenannten Airlaidverfahren zu einer Matte geformte Fasergemisch wird zwischen zwei Heizplatten verpresst, wobei die Heizplatte auf der Mattenoberseite eine Temperatur von 180°C aufweist. Die Presszeit wird so gewählt, dass die Bindefasern reagieren können. Zusätzlich kann die Matte in einem Ofen mit Heissluft mit einer Temperatur um 180°C stabilisiert werden.

In DE 34 30 467 A1 wird die Herstellung von Holzwerkstoffplatten aus einer Pressgutmatte beschrieben, die aus Holzfasern und einem aushärtbaren Bindemittel, z.B. einem Kunstharzbinder, aufgebaut ist. Die Aushärtung erfolgt mittels Wasserdampf in einer speziellen Presse. Man macht sich dabei den Umstand zunutze, dass der Wärmeübertrag von Wasserdampf effektiver ist als der von Luft, insbesondere bei dessen Kondensation. Allerdings kann hierbei eine Temperatur deutlich über 100°C wegen des damit verbundenen Überdrucks des Wasserdampfes gegenüber Umgebungsdruck zumindest ohne erheblichen apparativen Aufwand nicht erreicht werden. Ein leichter Überdruck ergibt sich bei DE 34 30 467 A1 durch das Einpressen des Wasserdampfes in der Presse in die Pressgutmatten zur Überwindung von deren Durchflusswiderstand. Für höhere Temperaturen wird mit überhitztem Wasserdampf gearbeitet. Es stehen jedoch Kunstharzbinder auf Acrylatbasis zur Verfügung, die bei Temperaturen < 100°C aushärtbar sind.

Bei Verfahren der aus DE 34 30 467 A1 bekannten Art wird das Bindemittel, wie in DE 102 47 413 A1 beschrieben, z.B. in flüssiger Form durch Sprühen auf die Holzfasern appliziert. Diese Applikation stellt bei der Herstellung der Pressgutmatten einen eigenen Verfahrensschritt dar und benötigt zudem, wie aus DE 102 47 413 A1 ebenfalls ersichtlich, eine relativ aufwändige Anlage. Bei der Verwendung von Bindefasern würde dieser Verfahrensschritt entfallen, da die Bindefasern einfach unter die übrigen Fasern gemischt werden könnten und eine gute und gleichmässige Vermischung der übrigen Fasern sowieso erforderlich ist. Mischungen aus Bindefasern mit weiteren Fasern lassen sich zudem sehr homogen herstellen und tendieren während der weiteren Verarbeitung auch nicht dazu, sich wieder zu entmischen. Entmischungen sind vor allem beim Einsatz von Bindemitteln in körniger Form wie bei DE 10 2004 062 647 A1 oder DE 10 2004 062 649 A1 zu befürchten.

Es besteht von daher ein Bedürfnis nach Bindefasern, die bei Verfahren der aus DE 34 30 467 A1 bekannten Art eingesetzt und mit heissem Wasserdampf bei ungefähr Umgebungsdruck (d.h. einschliesslich eines wie z.B. bei DE 34 30 467 A1ggf. auftretenden bzw. erforderlichen Überdrucks) aktiviert werden können. Die im vorgenannten Stand der Technik eingesetzten Bindefasern sind dazu nicht geeignet, da sie eine zu hohe Aktivierungstemperatur aufweisen.

Aus EP 1 153 957 B1 sind niedrigschmelzende Copolyamide bekannt, die in einer Ausführungsform einen Schmelzpunkt gemessen nach DIN 53765 kleiner als 90°C (peak maximum) aufweisen. Die Einstellung der Schmelztemperatur erfolgt dadurch, dass zusätzlich zu den üblicherweise verwendeten Bestandteilen Caprolactam/ω-Aminocapronsäure und Laurinlactam/ω-Aminolaurinsäure weitere ω-Aminocarbonsäuren und weitere Polyamidbildner in unterschiedlichen Mengenverhältnissen kombiniert werden. Die aus der EP 1 153 957 B1 bekannten Copolyamide sind speziell als Schmelzkleber für Textilien vorgesehen und geeignet. Zum Verspinnen sind sie hingegen aufgrund der tiefen relativen Viskosität nicht geeignet, so dass sich aus ihnen Bindefasern der gewünschten Art nicht herstellen lassen.

### DARSTELLUNG DER ERFINDUNG

Es ist daher Aufgabe der Erfindung, eine Bindefaser anzugeben, die zur Verfestigung von Naturfasern enthaltenden Flachmaterialien wie Papier, Karton, Holzfaserplatten oder Fasermatten verwendbar und dabei mit heissem Dampf aktivierbar ist.

Diese Aufgabe wird durch die Bindefaser gemäss Anspruch 1 gelöst.

Bei der erfindungsgemässen Bindefaser dient die erste thermoplastische Komponente als Klebekomponente. Sie umfasst ein Copolyamid. Durch dessen relative Viskosität von mindestens 1.50 und einen MVR von maximal 20 cm³/10min (bei 190°C, 2.16kg) ist sichergestellt, dass das Material schmelzspinnbar ist.

Sodann weist das Copolyamid der ersten thermoplastischen Komponente der erfindungsgemässen Bindefaser eine Hydrophobie kleiner als 7.2 auf. Die Hydrophobie ist hierbei definiert als das Verhältnis von Alkylgruppen (CH₂) zu Aminogruppen (NH₂ bzw. NH) im Monomeren. Für das Copolymer werden die einzelnen Hydrophobiewerte seiner monomeren Bestandteile anteilsmässig (gemäss mol-%) aufsummiert. Für Polyamid 6 aus Caprolactam ergibt sich beispielsweise mit 5 CH₂-Gruppen und einer NH₂(bzw. NH)-Gruppe ein Hydrophobiewert von 5.0. Für Polyamid 12 aus Laurinlactam ergibt sich mit 11 CH₂-Gruppen und einer NH₂(bzw. NH)-Gruppe ein Hydrophobiewert von 11.0. Für ein Copolyamid aus 60 mol-% bzw. 46 Gew.-% Caprolactam und 40 mol-% bzw. 54 Gew.-% Laurinlactam ergibt sich beispielsweise ein resultierender Hydrophobiewert von 7.40.

Durch seine niedrige Hydrophobie kleiner als 7.2 ist das Copolyamid der ersten thermoplastischen Komponente der erfindungsgemässen Bindefaser relativ hydrophil und kann dadurch leicht Wasser aus einer feuchten Umgebung aufnehmen. Die Wasseraufnahme führt wiederum zu einer Absenkung des Schmelzpunktes. Im Hinblick auf die vorliegend gewünschte Anwendung der erfindungsgemässen Bindefaser beispielsweise bei Verfahren der aus DE 34 30 467 A1 bekannten Art genügt es, wenn der Schmelzpunkt unter den dabei vorherrschenden Bedingungen, d.h. in einer mit heissem Wasserdampf zumindest stark angereicherten Atmosphäre bei ungefähr Umgebungsdruck, in einem Temperaturbereich liegt, der mit dem heissen Wasserdampf erreichbar ist. Bei der erfindungsgemässen Bindefaser liegt die Schmelztemperatur des Copolyamids der ersten thermoplastischen Komponente im mit Wasser gesättigten Zustand unterhalb 105°C.

Die durch die Wasseraufnahme bewirkte Absenkung der Schmelztemperatur bedeutet andererseits, dass die Schmelztemperatur im trockenen Zustand höher liegt. Bei der erfindungsgemässen Bindefaser weist das Copolyamid der ersten thermoplastischen Komponente im trockenen Zustand eine Schmelztemperatur höher als 105°C auf. Das ist von zusätzlichem Vorteil, weil die Flachmaterialien dadurch in normal feuchter und damit relativ trockener Umgebung mit einer höheren Temperatur belastet werden können. Sie weisen eine höhere Wärmeformbeständigkeit auf.

Wie ausgeführt, lässt sich der relativ niedrige Hydrophobiewert von kleiner 7.2 durch eine verhältnismässig grosse Anzahl an Aminogruppen (NH₂ bzw.NH) im Verhältnis zur Anzahl an Alkygruppen (CH₂) im Copolyamid erreichen. Die grosse Anzahl an Aminogruppen wirkt sich im aufgeschmolzenen bzw. erweichten Zustand des Copolyamids zusätzlich günstig auf die Klebeeigenschaften aus. Insbesondere entwickelt das Copolyamid der ersten thermoplastischen Komponente der erfindungsgemässen Bindefaser unter Ausbildung von Wasserstoffbrücken über die vielen Aminogruppen (NH₂ bzw.NH) gegenüber den in den angegebenen Flachmaterialen üblicherweise verwendeten Zellulosefasern eine gute Bindung. Dadurch wird bei solchen Flachmaterialien bereits mit einem geringen Binderanteil eine gute Festigkeit erreicht.

Zusammenfassend kann festgehalten werden, dass die Erfindung die Erkenntnis vermittelt, dass als Material für die wenigstens eine thermoplastische Komponente der Bindefaser für den Einsatz in Verfahren der aus DE 34 30 467 A1 bekannten Art Copolyamide mit verschiedenen Vorteilen einsetzbar sind, welche trocken einen Schmelzpunkt über der in dem Verfahren mit dem heissen Dampf bei ungefähr Umgebungsdruck erreichten oder erreichbaren Aktivierungstemperatur, in der heissen Dampfumgebung dagegen einen reduzierten, unterhalb der erreichten oder erreichbaren Temperatur liegenden Schmelz- oder zumindest Erweichungspunkt aufweisen.

Die Bindefaser kann mit gesättigtem oder überhitztem Wasserdampf oder mit einem Dampf/Luft-Gemisch oder in einem wässrigen Medium, das durch Energiezufuhr verdampft wird, aktiviert werden.

Bevorzugte Ausführungsformen der Erfindung sind in den Unteransprüchen angegeben.

Danach ist es im Hinblick auf die Verspinnbarkeit durch Schmelzspinnen bevorzugt, wenn das für die erste thermoplastische Komponente verwendete Copolyamid eine relative Viskosität von mindestens 1.55, besonders bevorzugt von mindestens 1.60 (gemessen 0.5%-ig in m-Kresol bei 25 °C) und einen MVR von maximal 15 cm³/10 min, besonders bevorzugt von maximal 10 cm³/10 min (gemessen bei 190°C und 2.16 kg Last nach ISO 1133) aufweist.

Im Hinblick auf eine deutlichere Absenkung ihres Schmelzpunktes in feuchter Umgebung sollte das für die erste thermoplastische Komponente verwendete Copolyamid eine Hydrophobie kleiner als 7.0 und besonders bevorzugt kleiner als 6.8 besitzen.

Um die erfindungsgemässe Faser mit heissem Dampf bei ungefähr Umgebungsdruck aktivieren zu können, sollte das für die erste thermoplastische Komponente verwendete Copolyamid im mit Wasser gesättigten Zustand bevorzugt eine Schmelztemperatur niedriger als 100°C aufweisen. Umgekehrt ist es bevorzugt, wenn das Copolyamid im trockenen Zustand eine Schmelztemperatur höher als 110°C aufweist.

Das für die erste thermoplastische Komponente verwendete Copolyamid weist folgende Zusammensetzung auf:
- Caprolactam 40 - 70 mol-%;
- Laurinlactam, und/oder 12-Aminododecansäure, 20 - 50 mol-%;
- Aminoundecansäure, 0 - 10 mol%;
- mindestens eine Dicarbonsäure 10 - 30 mol-% der folgenden Verbindungen:
- aliphatische α,ω-Dicarbonsäuren mit 4 bis einschliesslich 14 C-Atomen,
- aromatische Dicarbonsäuren wie Terephthalsäure, Isophthalsäure und 2,6-Naphthalindicarbonsäure, wobei der Anteil an aromatischen Dicarbonsäuren kleiner als 15 mol-% ist bezogen auf die Gesamtmenge aller Dicarbonsäuren;
- zu den Dicarbonsäuren eine äquimolare Menge eines oder mehrerer Diamine, wie z.B. Hexamethylendiamin, Piperazin, 2-Methyl-1,5-diaminopentan oder andere aliphatische langkettigen Diamine, wobei der molare Anteil an Hexamethylendiamin, bezogen auf das Diamingemisch, zwischen 50 und 100 mol-% beträgt.

Bei der obigen Spezifikation beträgt die Summe aus allen Lactamen, allen Aminocarbonsäuren und allen Dicarbonsäuren 100 mol-%. Dies entspricht einer Definition, bei der in der Copolyamid-Molekülkette die sich wiederholenden Einheiten zusammen 100 mol-% ergeben. Bei solchen Wiederholungseinheiten, die aus jeweils einer Dicarbonsäure und einem Diamin als komplementärem Monomer-Paar zusammengesetzt sind, zählt im Prinzip eine Dicarbonsäure und ein Diamin jeweils als halbe Wiederholungseinheit. Man kann aber, was rechnerisch auf dasselbe herauskommt, entweder die Dicarbonsäuren (wie im obigen Fall) oder die Diamine voll zählen (stellvertretend für die ganze Wiederholungseinheit, wie oben gemacht), wobei dann die komplementären Monomere (im obigen Fall die Diamine) in äquimolarer Menge (im obigen Fall zu den Dicarbonsäuren) vorliegen.

Für die vorliegend betrachteten Anwendungen ist die Bindefaser vorzugsweise eine Bikomponentenfaser mit einer weiteren thermoplastischen Komponente, und zwar weiter vorzugsweise vom Kern/Mantel-Typ. Bei der weiteren thermoplastischen Komponente sollte es sich um eine solche handeln, die im mit Wasser gesättigten Zustand eine Schmelztemperatur grösser als 130°C aufweist, und im trockenen Zustand von bevorzugt mindestens 150°C. Die zweite thermoplastische Komponente wird dadurch bei den vorliegend betrachteten Anwendungen nicht aufschmelzen und leistet einen positiven Beitrag zur Festigkeit des Endprodukts.

Die weitere thermoplastische Komponente kann ein Polyolefin, ein Polyamid, ein Copolyamid, ein Polyester oder ein Copolyester sein.

Insbesondere ist die weitere thermoplastische Komponente ausgewählt aus der Gruppe:
- Polypropylen und dessen Derivaten mit MVR 20-50 cm³/10 min (230°C, 2.16kg)
- Polyethylen (bevorzugt PE-HD) und dessen Derivaten mit MVR 10-30 cm³/10 min

### (190°C, 2.16kg)

- PA 6 mit MVR 40 - 80 cm³/10 min (260°C, 2.16kg)
- PA 6/66 mit Schmelzpunkt 180-220°C und MVR 40 - 80 cm³/10 min (260°C, 2.16kg)
- Copolyamid mit Schmelzpunkt 150 -180°C und MVR 5 - 15 cm³/10 min (190°C, 2.16kg)
- PBT mit MVR 40 - 80 cm³/10 min (260°C, 2.16kg)
- Copolyester mit Schmelzpunkt 150 - 180°C und MVR 5 - 15 cm³/10 min (190°C, 2.16kg)

Die angegebenen Schmelzpunktbereiche beziehen sich auf den trockenen Zustand. Die Viskosität (indirekt ausgedrückt durch den MVR) der weiteren thermoplastischen Komponente sollte so hoch sein, dass die Schmelzspinnbarkeit gewährleistet ist, aber so tief, dass die Extrusionstemperatur nicht mehr als 60°C über der Extrusionstemperatur des Copolyamids der ersten thermoplastischen Komponente liegt. Die Bikomponentenfaser kann so mit optimaler Spinntemperatur hergestellt werden, was zu einer gleichmässigen Kern/Mantel-Verteilung und einem verklebungsfreien Faserprodukt führt.

Die Bindefaser ist weiter bevorzugt eine Stapelfaser mit einem Durchmesser von 8 - 80 µm, vorzugsweise 10 - 30 µm, und einer Länge von 2 - 30 mm, vorzugsweise 4 -12 mm.

Schliesslich kann die Bindefaser an ihrer Oberfläche noch mit einer Präparation versehen sein, die dem Einsatz angepasst ist und die Vereinzelung der Faser beim Airlaid-Verfahren bzw. die Dispergierbarkeit beim Wetlaid-Verfahren sicherstellt.

Verwendung findet die erfindungsgemässe Bindefaser zur Verfestigung von Naturfasern enthaltenden Flachmaterialien (denen die Bindefaser zugemischt wurde), wobei die Naturfasern insbesondere Holzfasern oder Zellulosefasern und die Flachmaterialien insbesondere Papier, Karton, Vliese, Fasermatten oder Faserplatten (insbesondere Holzfaserplatten) sind. Da die Bindefaser mit heissem Wasserdampf aktivierbar ist, kann die Verfestigung in einer Dampfatmosphäre oder dampfhaltigen Atmosphäre bei ungefähr Umgebungsdruck (ca. Normaldruck) erfolgen. Besonders bevorzugt findet dabei die Verfestigung bei einer Temperatur < 125°C in einem Dampf/Luft-Gemisch mit einem Taupunkt < 100°C statt. In einer anderen bevorzugten Variante erfolgt die Verfestigung durch Kontakttrocknung oder Konvektionstrocknung eines feuchten Flachmaterials.

### BEISPIELE

Zur Untersuchung und zum Vergleich ihrer Schmelz- und Hafteigenschaften wurden zwei Bikomponentenfasern des Kern/Mantel-Typs jeweils mit einem Mantel aus Copolyamid hergestellt als Muster A bzw. B.

Die Zusammensetzung der Copolyamide dieser beiden Muster ergibt sich aus Tabelle I, in der die Anteile der einzelnen Monomere in mol-%, ihre Hydrophobie, ihre relative Viskosität, ihr MVR und ihr trocken gemessener Schmelzpunkt angegeben sind. Für den Kern beider Fasern wurde jeweils ein PP (Polypropylen) verwendet, mit einem ebenfalls trocken gemessenen Schmelzpunkt von 168°C.

**Tabelle I**

| Monomere (mol-%)* | Muster A | Muster B |
|---|---|---|
| Zusammensetzung | Teilkristallines CoPA, bestehend aus Caprolactam, Laurinlactam und weiteren aromatischen und aliphatischen Dicarbonsäuren und Diaminen wie folgt: | Teilkristallines CoPA, bestehend aus Caprolactam, Laurinlactam und weiteren aromatischen und aliphatischen Dicarbonsäuren und Diaminen wie folgt: |
| Caprolactam | 54 | 27 |
| Laurinlactam | 29 | 43 |
| | | |
| Adipinsäure | 17 | 15 |
| Sebazinsäure | | 15 |
| | | |
| Hexamethylendiamin | 17 | 30 |
| | | |
| Hydrophobie | 6.5 | 7.5 |
| relative Viskosität (0.5%-ig in m-Kresol bei 25°C) | 1.65 | 1.55 |
| MVR [cm³/10min] (190°C, 2.16kg) | 8 | 42 |
| Schmelzpunkt (trocken) [°C] | 113 | 87 |

| | | |
|---|---|---|
| *Die Summe aus allen Lactamen, Aminocarbonsäuren (falls vorhanden) und allen Dicarbonsäuren (oder der äquimolaren Menge an Diamin) ergibt jeweils 100 mol-%. | | |

Die Werte der Hydrophobie bilden, wie bereits erläutert, das Verhältnis der Anzahl an Alkylgruppen (CH₂) zur Anzahl an Aminogruppen (NH₂ bzw. NH) in den Monomeren. Die Hydrophobiewerte der einzelnen Monomere wurden dann für das Copolyamid molanteilsmässig aufsummiert. Die relativen Viskositätswerte wurden 0.5%-ig in m-Kresol bei 25°C gemessen (d.h. 0.5 g CoPA in 100 ml Lösung). Die MVR-Werte wurden gemäss ISO 1133 bei 190°C und einer Last von 2.16 kg bestimmt. Die Schmelzpunkte wurden nach DIN 53765 im trockenen Zustand bzw. in trockener Umgebung ermittelt, wobei das Copolyamid vor dem Aufschmelzen getrocknet wurde. Muster A, das eine Bindefaser nach der vorliegenden Erfindung darstellt, weist einen Schmelzpunkt im trockenen Zustand von 113°C auf, während Muster B im trockenen Zustand einen Schmelzpunkt von 87°C besitzt. Muster B stellt damit keine Bindefaser nach der vorliegenden Erfindung dar.

Die beiden Muster A und B wurden zur Verfestigung von Holzfasern eingesetzt, wobei die Aktivierung in einer Dampfatmosphäre bei einem Taupunkt von 95°C durchgeführt wurde. Zum Vergleich wurde die Aktivierung direkt in Wasser bei derselben Temperatur ausgeführt. Beurteilt wurde jeweils der Aufschmelzgrad der Muster sowie ihre Klebewirkung zu den Holzfasern (Haftung Matrix). Das Ergebnis ist in Tabelle II wiedergegeben:

**Tabelle II**

| Umgebung | Eigenschaften | Muster A | Muster B |
|---|---|---|---|
| Dampf | Aufschmelzgrad | sichtbar | sichtbar |
| 95°C | Haftung Matrix | gut | befriedigend |
| Wasserbad | Aufschmelzgrad | deutlich | deutlich |
| 95°C | Haftung Matrix | sehr gut | gut |

Die Tabelle II zeigt, dass bezüglich beider Muster die Ergebnisse im (nicht praxistauglichen) Wasserbad zwar besser sind als in Dampf, dass in Dampf jedoch ebenfalls ausreichend gute Ergebnisse für den Aufschmelzgrad und die Klebewirkung erhalten werden. Dabei schneidet das erfindungsgemässe Muster A trotz seines höheren Schmelzpunktes von deutlich über 100°C (im trockenen Zustand) überraschenderweise besser ab als das Vergleichsmuster B, von dem man aufgrund seines niedrigeren Schmelzpunktes von 87°C (im trockenen Zustand) an sich ein besseres Klebeverhalten erwartet hätte.

Dieses Ergebnis ist insofern auch vorteilhaft, als dass beim Einsatz des Materials von Muster A , das zudem noch aus preisgünstigeren Monomeren hergestellt wurde, das fertige Flachmaterial in trockenem Zustand mit einer höheren Temperatur belastbar ist und eine um ca. 50%-100% höhere Reissfestigkeit aufweist (Tabelle III).

**Tabelle III, Reissfestigkeit von Holzfasermatten (Verfestigung mit Dampf/Luft-Gemisch)**

| Thermofusion | Bikofaseranteil | Holzfaseranteil | Muster A | Muster B |
|---|---|---|---|---|
| Dampf/Luft | 4 % | 96% | 15 kPa | 8 kPa |
| TP:95°C | | | | |
| Dampf/Luft | 10 % | 90% | 30 kPa | 20 kPa |
| TP:95°C | | | | |

| | | | | |
|---|---|---|---|---|
| TP : Taupunkt | | | | |

Zum Vergleich des Musters A mit anderen Materialien wurden zwei weitere Klebefasern aus Copolyester hergestellt und zwar als Muster C bzw. D. In Tabelle IV sind die Kennzahlen dieser beiden Copolyester aufgelistet. Von den beiden Copolyestern ist der von Muster C teilkristallin und der von Muster D amorph. Lediglich für Muster C ist daher der Schmelzpunkt von 120°C angegeben, wobei dieser wiederum für den trockenen Zustand gilt. Die Hydrophobie kann logischerweise bei Copolyestern nicht angegeben werden, weil diese keine Aminogruppen enthalten.

**Tabelle IV**

| | Muster C | Muster D |
|---|---|---|
| Zusammensetzung | Teilkristalliner CoPES, bestehend aus aromatischen und aliphatischen Dicarbonsäuren und Diolen | Amorpher CoPES, bestehend aus aromatischen und aliphatischen Dicarbonsäuren und Diolen |
| Relative Viskosität (1%-ig in m-Kresol) | 2.04 | 1.66 |
| MVR [cm³/10min] (190°C, 2.16kg) | 19 | 5.6 |
| Schmelzpunkt [°C] | 120 | - |
| Glasübergangstemp. [°C] | 7 | 69 |
| Wasseraufnahme (23°C / 100% r.F.) | < 0.5% | < 0.5% |

Tabelle V zeigt das Ergebnis von Versuchen mit den Mustern A, C und D wiederum hinsichtlich ihres Aufschmelzgrades und ihrer Klebewirkung (Haftung Matrix) bei verschiedenen Temperaturen in Dampf und im Wasserbad (zum Teil bei Überdruck).

**Tabelle V**

| Umgebung | °C | Eigenschaften | Muster A | Muster C | Muster D |
|---|---|---|---|---|---|
| Wasserbad | 95 | Aufschmelzgrad | deutlich | sichtbar | nicht sichtbar |
| | | Haftung Matrix | sehr gut | keine | keine |
| | 105 | Aufschmelzgrad | deutlich | sichtbar | nicht sichtbar |
| | | Haftung Matrix | sehr gut | keine | keine |
| | 115 | Aufschmelzgrad | deutlich | deutlich | sichtbar |
| | | Haftung Matrix | sehr gut | gut | keine |
| | 125 | Aufschmelzgrad | deutlich | deutlich | sichtbar |
| | | Haftung Matrix | sehr gut | gut | keine |
| Wasser-Dampf | 95 | Aufschmelzgrad | sichtbar | nicht sichtbar | nicht sichtbar |
| | | Haftung Matrix | gut | keine | keine |
| | 105 | Aufschmelzgrad | deutlich | nicht sichtbar | nicht sichtbar |
| | | Haftung Matrix | sehr gut | keine | keine |

Danach zeigen die beiden Copolyester gemäss den Mustern C und D keine zum erfindungsgemässen Copolyamid gemäss Muster A vergleichbare Schmelzpunktabsenkung und sind mit heissem Dampf nicht aktivierbar.

## Patentansprüche

1. Bindefaser zur Verfestigung von Naturfasern enthaltenden Flachmaterialien,
**dadurch gekennzeichnet, dass** sie als wenigstens eine erste thermoplastische Komponente ein Copolyamid mit folgender Zusammensetzuncg umfasst:
- Caprolactam 40 - 70 mol-%;
- Laurinlactam, und/oder 12-Aminododecansäure. 20 - 50 mol-%:
- Aminoundecansäure, 0 - 10 mol%,
- mindestens eine Dicarbonsäure 10 - 30 mol-% der folgenden Verbindungen:
- aliphatische α,ω-Dicarbonsäuren mit 4 bis einschliesslich 14 C-Atomen,
- aromatische Dicarbonsäuren wie Terephthalsäure, Isophthalsäure und 2,6-Naphthalindicarbonsäure, wobei der Anteil an aromatischen Dicarbonsäuren kleiner als 15 mol-% ist bezogen auf die Gesamtmenge aller Dicarbonsäuren;
- zu den Dicarbonsäuren eine äquimolare Menge eines oder mehrerer Diamine, wie z.B. Hexamethylendiamin, Piperazin, 2-Methyl-1,5-diaminopentan oder andere aliphatische langkettigen Diamine, wobei der molare Anteil an Hexamethylendiamin, bezogen auf das Diamingemisch, zwischen 50 und 100 mol-% beträgt;
wobei die Summe aus allen Lactamen, allen Aminocarbonsäuren und allen Dicarbonsäuren 100 mol-% beträgt: und
wobei das Copolyamid eine relative Viskosität von mindestens 1.50 (gemessen 0.5%-ig in m-Kresol bei 25°C), einen MVR von maximal 20 cm³/10 min (gemessen bei 190°C und 2.16 kg Last), eine Hydrophobie (Verhältnis von Alkylgruppen zu Aminogruppen in den Monomeren) kleiner als 7.2, im mit Wasser gesättigten Zustand eine Schmelztemperatur niedriger als 105°C und im trockenen Zustand eine höhere Schmelztemperatur aufweist.

2. Bindefaser nach Anspruch 1, **dadurch gekennzeichnet, dass** das Copolyamid der wenigstens einen ersten thermoplastischen Komponente eine relative Viskosität von mindestens 1.55, vorzugsweise von mindestens 1.60 (gemessen 0.5%-ig in m-Kresol bei 25 °C) aufweist.

3. Bindefaser nach einem der Ansprüche 1 - 2, **dadurch gekennzeichnet, dass** das Copolyamid der wenigstens einen ersten thermoplastische Komponente einen MVR von maximal 15 cm³/10 min, vorzugsweise von maximal 10 cm³/10 min (gemessen bei 190 °C und 2.16 kg Last) aufweist.

4. Bindefaser nach einem der Ansprüche 1 - 3, **dadurch gekennzeichnet, dass** das Copolyamid der wenigstens einen ersten thermoplastischen Komponente eine Hydrophobie kleiner als 7.0, vorzugsweise kleiner als 6.8, aufweist.

5. Bindefaser nach einem der Ansprüche 1 - 4, **dadurch gekennzeichnet, dass** das Copolyamid der wenigstens einen ersten thermoplastischen Komponente im mit Wasser gesättigten Zustand eine Schmelztemperatur niedriger als 100°C aufweist.

6. Bindefaser nach einem der Ansprüche 1 - 5, **dadurch gekennzeichnet, dass** das Copolyamid der wenigstens einen ersten thermoplastischen Komponente im trockenen Zustand eine Schmelztemperatur höher als 110°C aufweist.

7. Bindefaser nach einem der Ansprüche 1 - 6, **dadurch gekennzeichnet, dass** sie eine Bikomponentenfaser, vorzugsweise vom Kern/Mantel-Typ, mit einer weiteren thermoplastischen Komponente ist, wobei die weitere thermoplastische Komponente im mit Wasser gesättigten Zustand eine Schmelztemperatur grösser als 130°C und im trockenen Zustand von bevorzugt mindestens 150°C aufweist.

8. Bindefaser nach Anspruch 9, **dadurch gekennzeichnet dass** die weitere thermoplastische Komponente ein Polyolefin, ein Polyamid, ein Copolyamid, ein Polyester oder ein Copolyester ist.

9. Bindefaser nach Anspruch 8, **dadurch gekennzeichnet, dass** die weitere thermoplastische Komponente ausgewählt ist aus der Gruppe:
- Polypropylen und dessen Derivaten mit MVR 20-50 cm³/10 min (230°C, 2.16kg)
- Polyethylen (bevorzugt PE-HD) und dessen Derivaten mit MVR 10-30 cm³/10 min (190°C, 2.16kg)
- PA 6 mit MVR 40 - 80 cm³/10 min (260°C, 2.16kg)
- PA 6/66 mit Schmelzpunkt 180-220°C und MVR 40 - 80 cm³/10 min (260°C, 2.16kg)
- Copolyamid mit Schmelzpunkt 150 -180°C und MVR 5 - 15 cm³/10 min (190°C, 2.16kg)
- PBT mit MVR 40 - 80 cm³/10 min (260°C, 2.16kg)
- Copolyester mit Schmelzpunkt 150 - 180°C und MVR 5 - 15 cm³/10 min (190°C, 2.16kg)

10. Bindefaser nach einem der Ansprüche 1 - 9, **dadurch gekennzeichnet, dass** sie eine Stapelfaser mit einem Durchmesser von 8 - 80 µm, vorzugsweise von 10
- 30 µm, und einer Länge von 2 - 30 mm, vorzugsweise 4 - 12 mm, ist.

11. Bindefaser nach einem der Ansprüche 1 10, **dadurch gekennzeichnet, dass** sie mit einer Präparation versehen ist, welche die Vereinzelung der Faser beim Airlaid-Verfahren bzw. die Dispergierbarkeit beim Wetlaid-Verfahren sicherstellt.

12. Verwendung einer Bindefaser gemäss einem der Ansprüche 1 - 11 zur Verfestigung von Naturfasern enthaltenden Flachmaterialien in einer Dampfatmosphäre oder dampfhaltigen Atmosphäre bei ungefähr Umgebungsdruck, wobei die Naturfasern insbesondere Holzfasern oder Zellulosefasern und die Flachmaterialien insbesondere Papier, Karton, Vliese, Fasermatten oder Faserplatten sind.

13. Verwendung einer Bindefaser gemäss Anspruch 12, **dadurch gekennzeichnet, dass** die Verfestigung bei einer Temperatur < 125°C in einem Dampf/Luft-Gemisch mit einem Taupunkt < 100°C stattfindet.

14. Verwendung einer Bindefaser gemäss Anspruch 12, **dadurch gekennzeichnet, dass** die Verfestigung durch Kontakttrocknung oder Konvektionstrocknung eines feuchten Flachmaterials erfolgt.

## Claims

1. Binding fibre for fixing flat materials containing natural fibres, **characterized in that** it comprises as at least one first thermoplastic component a copolyamide with the following composition:
- caprolactam 40-70 mol%;
- laurolactam and/or 12-aminododecanoic acid 20-50 mol%;
- aminoundecanoic acid 0-10 mol%;
- at least one dicarboxylic acid 10-30 mol% of the following compounds:
- aliphatic α,ω-dicarboxylic acids with 4 up to and including 14 carbon atoms,
- aromatic dicarboxylic acids such as terephthalic acid, isophthalic acid and 2,6-naphthalenedicarboxylic acid, wherein the proportion of aromatic dicarboxylic acids is less than 15 mol%, based on the total quantity of all dicarboxylic acids;
- an equimolar amount to the dicarboxylic acids of one or more diamines, for example hexamethylenediamine, piperazine, 2-methyl-1,5-diaminopentane or other aliphatic long-chain diamines, wherein the molar proportion of hexamethylenediamine, based on the diamine mixture, is between 50 and 100 mol%;
wherein the sum total of all lactams, all amino carboxylic acids and all dicarboxylic acids is 100 mol%; and
wherein the copolyamide has a relative viscosity of at least 1.50 (measured at 0.5% concentration in m-cresol at 25°C), an MVR of at most 20 cm³/10 min (measured at 190°C under a load of 2.16 kg), a hydrophobicity (ratio of alkyl groups to amino groups in the monomers) of less than 7.2, a melting temperature lower than 105°C in the water-saturated state and a higher melting temperature in the dry state.

2. Binding fibre according to Claim 1, **characterized in that** the copolyamide of the at least one first thermoplastic component has a relative viscosity of at least 1.55 and preferably of at least 1.60 (measured at 0.5% concentration in m-cresol at 25°C).

3. Binding fibre according to any one of Claims 1-2, **characterized in that** the copolyamide of the at least one first thermoplastic component has an MVR of at most 15 cm³/10 min and preferably of at most 10 cm³/10 min (measured at 190°C under a load of 2.16 kg).

4. Binding fibre according to any one of Claims 1-3, **characterized in that** the copolyamide of the at least one first thermoplastic component has a hydrophobicity of less than 7.0 and preferably less than 6.8.

5. Binding fibre according to any one of Claims 1-4, **characterized in that** the copolyamide of the at least one first thermoplastic component has a melting temperature lower than 100°C in the water-saturated state.

6. Binding fibre according to any one of Claims 1-5, **characterized in that** the copolyamide of the at least one first thermoplastic component has a melting temperature higher than 110°C in the dry state.

7. Binding fibre according to any one of Claims 1-6, **characterized in that** it is a bicomponent fibre, preferably of the core/sheath type, with a further thermoplastic component, wherein the further thermoplastic component has a melting temperature greater than 130°C in the water-saturated state and of preferably at least 150°C in the dry state.

8. Binding fibre according to Claim 9, **characterized in that** the further thermoplastic component is a polyolefin, a polyamide, a copolyamide, a polyester or a copolyester.

9. Binding fibre according to Claim 8, **characterized in that** the further thermoplastic component is selected from the group:
- polypropylene and its derivatives with MVR 20-50 cm³/10 min (230°C, 2.16 kg)
- polyethylene (preferably HD-PE) and its derivatives with MVR 10-30 cm³/10 min (190°C, 2.16 kg)
- PA 6 with MVR 40-80 cm³/10 min (260°C, 2.16 kg)
- PA 6/66 with melting point 180-220°C and MVR 40-80 cm³/10 min (260°C, 2.16 kg)
- copolyamide with melting point 150-180°C and MVR 5-15 cm³/10 min (190°C, 2.16 kg)
- PBT with MVR 40-80 cm³/10 min (260°C, 2.16 kg)
- copolyester with melting point 150-180°C and MVR 5-15 cm³/10 min (190°C, 2.16kg).

10. Binding fibre according to any one of Claims 1 to 9, **characterized in that** it is a staple fibre having a diameter of 8-80 µm and preferably of 10-30 µm and a length of 2-30 mm and preferably 4-12 mm.

11. Binding fibre according to any one of Claims 1-10, **characterized in that** it is finished with a preparation ensuring individualization of the fibre in the air-laid process and/or dispersibility in the wet-laid process.

12. Use of a binding fibre according to any one of Claims 1-11 for fixing flat materials containing natural fibres in a steam atmosphere or steam-containing atmosphere at approximately ambient pressure, wherein the natural fibres are more particularly wood fibres and cellulose fibres and the flat materials are more particularly paper, cardboard, fibrous nonwoven webs, fibre mats or fibreboards.

13. Use of a binding fibre according to Claim 12, **characterized in that** the fixing takes place at a temperature < 125°C in a steam/air mixture with a dewpoint < 100°C.

14. Use of a binding fibre according to Claim 12, **characterized in that** the fixing is effected by contact drying or by convection drying of a moist flat material.

## Revendications

1. Fibre de liaison destinée à la fixation de matériaux plats contenant des fibres naturelles, **caractérisée en ce qu'**elle comporte en tant qu'au moins un premier composant thermoplastique un copolyamide présentant la composition suivants :
- caprolactame 40 - 70 % en moles ;
- lactame laurique, et/ou 12-aminoacide dodécanoïque, 20 - 50 % en moles ;
- aminoacide d'undécane, 0 - 10 % en moles,
- au moins un acide dicarboxylique 10 - 30 % en moles des composés suivantes :
- α,ω-acides dicarboxyliques aliphatiques avec 4 jusqu'à y compris 14 atomes de C,
- acides dicarboxyliques aromatiques tels qu'acide téréphtalique, acide isophtalique et 2,6-acide dicarboxylique de naphtaline, la fraction d'acides dicarboxyliques aromatiques étant inférieure à 15 % en moles par rapport à la quantité globale de tous les acides dicarboxyliques ;
- par rapport aux acides dicarboxyliques une quantité équimolaire d'une ou plusieurs diamines, telles que par exemple diamine d'hexaméthylène, pipérazine, 2-méthyl-1,5-diaminopentane ou autres diamines aliphatiques à chaîne longue, la fraction molaire de diamine d'hexaméthylène par rapport au mélange de diamine étant comprise entre 50 et 100 % en moles ;
le total résultant de tous les lactames, de tous les aminoacides et de tous les acides dicarboxyliques étant 100 % en moles, et
le copolyamide présentant une viscosité relative d'au moins 1,5 (mesurée avec dilution de 0,5 % dans le m-crésol à 25°C), un MVR d'au maximum 20 cm³/10 min (mesuré à 190°C et 2,16 kg de charge), une hydrophobie (rapport entre les groupes alkyle et les aminogroupes dans les monomères) inférieure à 7,2, dans l'état saturé en eau, une température de fusion inférieure à 105°C et à l'état sec une température de fusion supérieure.

2. Fibre de liaison selon la revendication 1, **caractérisée en ce que** le copolyamide du au moins un premier composant thermoplastique présente une viscosité relative d'au moins 1,55, de préférence d'au moins 1,60 (mesurée avec dilution à 0,5 % dans le m-crésol à 25°C).

3. Fibre de liaison selon l'une des revendications 1 et 2, **caractérisée en ce que** le copolyamide du au moins un premier composant thermoplastique présente un MVR d'au maximum 15 cm³/10 min, de préférence d'au maximum 10 cm³/10 min (mesuré à 190°C et 2,16 kg de charge).

4. Fibre de liaison selon l'une des revendications 1 à 3, **caractérisée en ce que** le copolyamide du au moins un premier composant thermoplastique présente une hydrophobie inférieure à 7,0, de préférence inférieure à 6,8.

5. Fibre de liaison selon l'une des revendications 1 à 4, **caractérisée en ce que** le copolyamide du au moins un premier composant thermoplastique présente à l'état saturé en eau une température de fusion inférieure à 100°C.

6. Fibre de liaison selon l'une des revendications 1 à 5, **caractérisée en ce que** le copolyamide du au moins un premier composant thermoplastique présente à l'état sec une température de fusion supérieure à 110°C.

7. Fibre de liaison selon l'une des revendications 1 à 6, **caractérisée en ce qu'**elle est une fibre avec deux composants, de préférence du type noyau/enveloppe, à un autre composant thermoplastique, l'autre composant thermoplastique présentant à l'état saturé en eau une température de fusion supérieure à 130°C et à l'état sec de préférence d'au moins 150°C.

8. Fibre de liaison selon la revendication 9, **caractérisée en ce que** l'autre composant thermoplastique est une polyoléfine, un polyamide, un copolyamide, un polyester ou un copolyester.

9. Fibre de liaison selon la revendication 8, **caractérisée en ce que** l'autre composant thermoplastique est sélectionné dans le groupe suivait :
- polypropylène et ses dérivés avec MVR 20-50 cm³/10 min (230°C, 2, 16 kg)
- polyéthylène (de préférence PE-HD) et ses dérivés avec MVR 10-30 cm³/10 min (190°C, 2,16 kg)
- PA 6 avec MVR 40-80 cm³/10 min (260°C, 2,16 kg)
- PA 6/66 avec point de fusion 180-220°C et MVR 40-80 cm³/10 min (260°C, 2,16 kg)
- copolyamide avec point de fusion 150-180°C et MVR 5-15 cm³/10 min (190°C, 2,16 kg)
- PBT avec MVR 40-80 cm³/10 min (260°C, 2,16 kg)
- copolyester avec point de fusion 150-180°C et MVR 5-15 cm³/10 min (190°C, 2,16 kg).

10. Fibre de liaison selon l'une des revendications 1 à 9, **caractérisée en ce qu'**elle est une fibre artificielle discontinue avec un diamètre de 8 à 80 µm, de préférence 10 à 30 µm, et une longueur de 2 à 30 mm, de préférence 4 à 12 mm.

11. Fibre de liaison selon l'une des revendications 1 à 10, **caractérisée en ce qu'**elle est dotée d'une préparation qui garantit l'individualisation de la fibre avec le procédé air-laid et la dispersibilité avec le procédé par voie humide.

12. Utilisation d'une fibre de liaison selon l'une des revendications 1 - 11 pour la fixation de matériaux plats contenant des fibres naturelles dans une atmosphère de vapeur ou une atmosphère contenant de la vapeur à environ la pression ambiante, les fibres naturelles étant en particulier des fibres de bois ou des fibres de cellulose et les matériaux plats étant en particulier du papier, du carton, des non-tissés, des tapis de fibre ou des panneaux de fibre.

13. Utilisation d'une fibre de liaison selon la revendication 12, **caractérisée en ce que** la fixation a lieu à une température inférieure à 125°C dans un mélange de vapeur/air avec un point de rosée inférieur à 100°C.

14. Utilisation d'une fibre de liaison selon la revendication 12, **caractérisée en ce que** la fixation s'effectue par séchage par contact ou séchage par convection d'un matériau plat humide.
